# EUROPEAN PATENT APPLICATION

(11) **EP 4 382 404 A1**
(43) Date of publication of application: **12.06.2024**
(21) Application number: 22306838.8
(22) Date of filing: 09.12.2022
(51) Int. Cl.: B63B 3/06, B63B 75/00, F03D 13/25, B63B 1/10, B63B 73/43, B63B 77/10, B63B 35/44

(54) **METHOD OF MANUFACTURING A FLOATER, IN PARTICULAR A FLOATER OF A FLOATING STRUCTURE OF AN OFFSHORE WIND TURBINE**

(71) Applicant: TOTALENERGIES ONETECH, 92400 Courbevoie (FR)
(72) Inventor: AUBERT, Jean-Michel, 92078 PARIS LA DEFENSE (FR)
(74) Representative: Lavoix

(57) **Abstract**

The method of manufacturing a floater (2) comprises the steps of obtaining a plurality of wall portions (12), each wall portion (12) corresponding to an angular sector of an axial section (10) of a sidewall (6) of the floater, and assembling the wall portions (12) such as to manufacture axial sections (10) of the sidewall (6) sequentially.

The assembly of the wall portions (12) starts with the assembly of a first axial section (10) onto one of the end plates (8) and at least one wall portion (12) is stiffened and/or at least one of the end plates (8) is stiffened.

## Description

The present invention relates to the manufacture of a floater for a floating structure, in particular a floating structure of large dimensions, in particular a floating structure of an offshore wind turbine.

An offshore wind turbine has to be provided with a floating structure capable of withstanding high static loads and high dynamic loads. The static loads are generated by the mass of the wind turbine which can be of large dimensions, for example with a mast having a height of 80 m or more and a rotor having a diameter of 80 m or more. The dynamic loads are due to the movements of the sea.

A floating structure of an offshore wind turbine has to be provided with floaters having large dimensions, for example floaters of cylindrical shape with a diameter of 8 m or more and a height of 10 m or more.

The manufacture of the offshore wind turbine, including the floating structure, is costly and generates CO₂ emissions that negatively impact the global carbon footprint of the manufacture and operation of the offshore wind turbine over the lifetime of the wind turbine.

One of the aims of the invention is to propose a method of manufacturing a floater that is efficient economically and has a low carbon footprint.

To this end, the invention propose a method of manufacturing a floater, in particular a floater of a floating structure of an off-shore wind turbine, the floater comprising a metallic hollow floater body comprising a substantially cylindrical sidewall extending along a longitudinal axis and end plates closing the axial ends of the sidewall, the method comprising the steps of obtaining a plurality of wall portions, each wall portion corresponding to an angular sector of an axial section of the sidewall, and assembling the wall portions such as to manufacture axial sections of the sidewall sequentially, the wall portions of each following axial section being assembled to wall portions of the preceding axial section, wherein the assembly of the wall portions starts with the assembly of a first axial section onto one of the end plates, and at least one wall portion is stiffened, each stiffened wall portion being provided with at least one stiffener fastened on the wall portion preferably on an inner face of the wall portion and/or at least one of the end plates is stiffened, each stiffened end plate being provided with at least one stiffener attached to the end plate, preferably to an inner face of the end plate.

The manufacture of wall portions corresponding to angular sectors of axial sections of the cylindrical sidewall of the floater and the subsequent assembly of these wall portions to form the floater is efficient economically and in terms of carbon footprint.

The wall portions can be manufactured on a first manufacturing site and transported to a second assembly site easily and economically.

In particular, many wall portions can be fitted one into the others in a compact manner for transportation in a container, e.g. a standard transport container, via public roads, freight train, ship and/or airplane, without the need to use specific containers or specific transportation means.

The manufacture of the floater can be distributed between the first site and to the second site for manufacture and transport efficiency with involving operators on both the first site and the second site.

In specific embodiments, the manufacturing method comprises one or several of the following features, taken individually or in any technically feasible combination:
- the wall portions of at least one or each following axial section are assembled on top of a preceding axial section;
- the wall portions of at least one or each following axial section are assembled at the bottom of a preceding axial section;
- wherein the sidewall is manufactured from bottom to top, the wall portions of each following axial section being assembled on top of the preceding axial section;
- the sidewall is manufactured from top to bottom, the wall portions of each following axial section being assembled at the bottom of the preceding axial section;
- the method comprises fastening a stiffener provided on a wall portion to another wall portion and/or to a stiffener of another wall portion, to an end plate and/or to a stiffener of an end plate;
- the method comprises fastening a stiffener provided on an end plate to a wall portion and/or to a stiffener of a wall portion;
- the method comprises the assembly of a first wall portion and a second wall portion with fastening a stiffener of the first wall portion to the second wall portion and/or to a stiffener of the second wall portion;
- a first wall portion has a stiffener having an end portion protruding from an edge of the first wall portion, the manufacturing method comprising the assembly of the first wall portion to a second wall portion with fastening the protruding end portion of the stiffener to the second wall portion;
- a first wall portion has a stiffener having an end portion protruding from an edge of the first wall portion and a second wall portion has a stiffener having a setback end portion ending at a distance from an edge of the second wall portion, the manufacturing method comprising the assembly of the first wall portion and the second wall portion with fastening the protruding end portion of the stiffener of the first wall portion to the second wall portion and/or to the setback end potion of the stiffener of the second wall portion;
- a first wall portion provided with a stiffener having a setback end portion terminating at a distance from an edge of the first wall portion and a second wall portion has a stiffener having a setback end portion ending at a distance from an edge of the second wall portion, the manufacturing method comprising the assembly of the first wall portion and the second wall portio with connecting the set back end portion of the stiffener of the first wall portion to the a setback end portion of the stiffener of the second wall portion using an intermediate connection piece;
- at least one wall portion has a stiffener having one end portion that terminates at an edge of the wall portion;
- the wall portions are manufacture at a first site, then transported to a second site via public roads, via freight train, via ship and/or via airplane, then assembled to form the sidewall of the floater at the second site, the second site being preferably at seashore.

The invention also relates to a method of manufacturing a floating structure, in particular a floating structure of an off-shore wind turbine, the manufacturing method including the manufacture of a plurality of floaters as per the manufacturing method as defined above, and the connection of the floaters with connection members such as to obtain the floating structure comprising several floaters connected by the connection members.

The invention and its advantages will be better understood upon reading the following description, given solely as a non-limiting example and made with reference to the appended drawings, on which:
- Figure 1 is a perspective view of a floater;
- Figure 2 is a perspective view of a wall portion of a sidewall of the floater, the wall portion being provided with stiffeners;
- Figure 3 is a perspective view of an end plate of the floater, the end plate being provided with stiffeners;
- Figures 4 to 7 are perspective views illustrating steps of manufacturing the floater of Figure 1;
- Figures 8 to 10 illustrate different ways of assembling adjacent wall portions of the floater provided with stiffeners; and
- Figure 11 is a side view of an off-shore wind turbine comprising a floating structure including floaters.

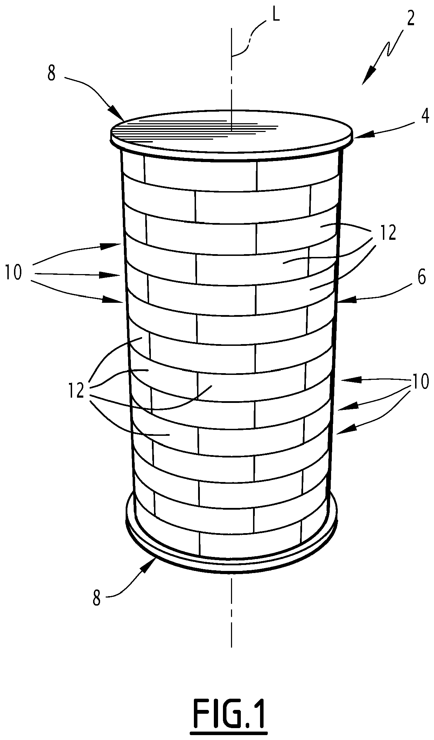

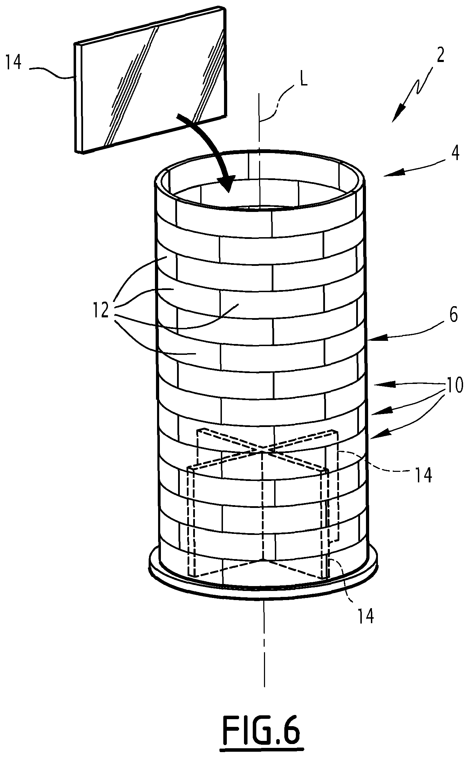

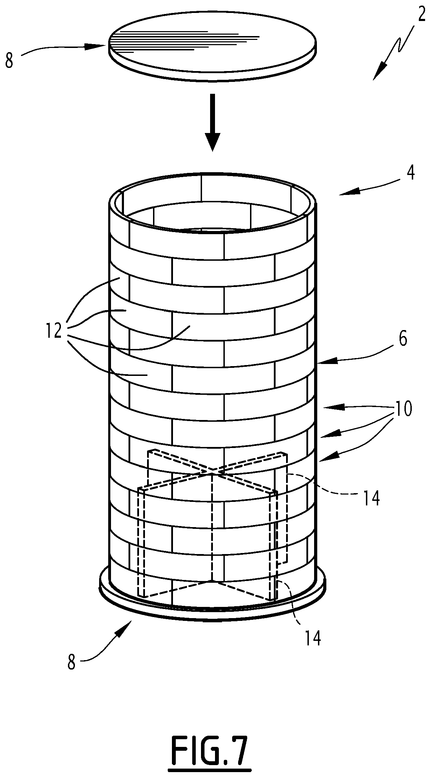

As illustrated on Figures 1 - 7, a floater 2 has a metallic hollow floater body 4 comprising a sidewall 6 of substantially cylindrical shape extending along the longitudinal axis L and two end plates 8 closing the axial ends of the sidewall 6.

In the following, the terms "horizontal", "vertical", "lower", "upper", "bottom" and "top" refer to the floater 2 arranged with the longitudinal axis L extending vertically.

Each end plate 8 closes a respective end of the sidewall 6, preferably in a sealed manner.

One of the end plates 8 - also referred to as the lower end plate 8 - closes the lower end of the sidewall 6 and the other end plate 8 - also referred to as the upper end plate 8 - closes the upper end of the sidewall 6.

The floater body 4 is preferably closed in sealed manner. The sidewall 6 and the end plates 8 define a sealed internal volume. This provides buoyancy to the floater 2.

The sidewall 6 exhibits preferably a circular cross-section or an elliptical cross-section. The cross-section is taken in any plane perpendicular to the longitudinal axis L. The circular cross-section or elliptical cross-section is appropriate to resist the hydrostatic efforts when the floater is used in a floating structure.

Each end plate 8 is in the shape of a disc with a contour corresponding to the cross-section of the sidewall 6, in particular a circular contour or an elliptical contour.

Each end plate 8 is assembled to a respective axial end of the sidewall 6 such as to close said axial end, preferably in a sealed manner.

The sidewall 6 of the floater body 4 is made of a plurality of separate axial sections 10 assembled together, each axial section 10 being made of a plurality of separate wall portions 12 assembled together.

Each axial section 10 corresponds to a fraction of the length of the sidewall 6 along the longitudinal axis L. Each axial section 10 defines a respective axial length portion of the sidewall 6.

Each wall portion 12 corresponds to an angular sector of an axial section 10 of the sidewall 6 around the longitudinal axis. Each wall portion 12 defines a respective portion of the circumference of one of the axial sections 10 of the sidewall 6.

Each wall portion 12 extends for example circumferentially around the longitudinal axis L on an angular sector of 180° or less, in particular 120° or less, for example 60° or less.

Each axial section 10 is made of at least two wall portions 12, in particular at least three wall portions 12. Each axial section 10 is preferably made of twelve wall portions 12 or less, in particular eight wall portions 12 or less.

Each axial section 10 is made for example of two wall portions 12, three wall portions 12, four wall portions 12, five wall portions 12, six wall portions 12, seven wall portions 12 or eight wall portions 12.

The axial sections 10 comprises preferably the same number of wall portions 12.

Advantageously, all the wall portions 12 are identical. In particular, all the wall portions 12 have the same height (taken along the longitudinal axis L) and have the same circumferential extend.

Preferably, as illustrated on Figure 1, the joints between the wall portions 12 of an axial section 10 are circumferentially offset with respect to the joints between the wall portions 12 of another axial section 10 adjacent said axial section 10.

In particular, as illustrated on Figure 1, the joints between the wall portions 12 of each axial section 10 are circumferentially offset with respect to the joints between the wall portions 12 of each other axial section 10 adjacent said axial section 10.

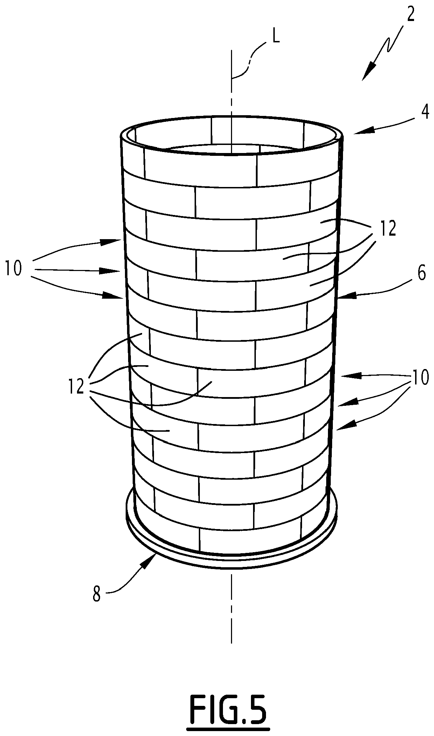

As illustrated on dotted line on Figure 5, the floater 2 optionally comprises one or several internal bulkheads 14 inserted inside the floater body 4.

Each bulkhead 14 extends for example transversely inside the floater body 4 with being connected to the sidewall 6 and/or the one or each end plate 8.

Each bulkhead 14 increases the resistance of the sidewall 6 to crushing, e.g. due to high hydrostatic loads.

Each bulkhead 14 is for example provided in the shape of a plate inserted inside the floater body 4 with extending parallel to the longitudinal axis L and having opposed edges parallel to the longitudinal axis L which are connected to two circumferentially spaced locations of the sidewall 6, preferably between two locations diametrically opposed with respect to the longitudinal axis L.

The floater 2 comprises for example internal bulkhead 14 crossing each other inside the floater body 4.

In particular, the floater 2 comprises at least two plate-shaped bulkheads 14 crossing each other inside the floater body 4. The two bulkheads 14 are for example perpendicular to each other.

The floater 2 comprises for example bulkheads 14 on the entire length of the floater body 4 or only in at least one portion of length of the floater body 4.

The floater body 4 has for example at least one reinforced length portion provided with at least one bulkhead 14 of the floater body 4 and/or at least one non-reinforced length portion deprived of bulkhead 14.

In one example, the floater body 4 has a reinforced length portion at one of the two axial ends of the floater body 4 and a non-reinforced length portion at the other one of the two axial end of the floater body 4.

In one example, the floater body 4 has two reinforced length portions and one non-reinforced length portion located between the two reinforced length portions. The two reinforced length portion are for example adjacent the axial ends of the floater body 4.

As illustrated on Figure 5, the floater 2 comprises for example two plate-shaped internal bulkheads 14 extending parallel to the longitudinal axis L and crossing each other inside the floater body 4, the bulkheads 14 being preferably perpendicular to each other. The bulkheads 14 are provided in a length portion of the floater body adjacent one axial end of the floater body 4 and defining a reinforced length portion of the floater body 4.

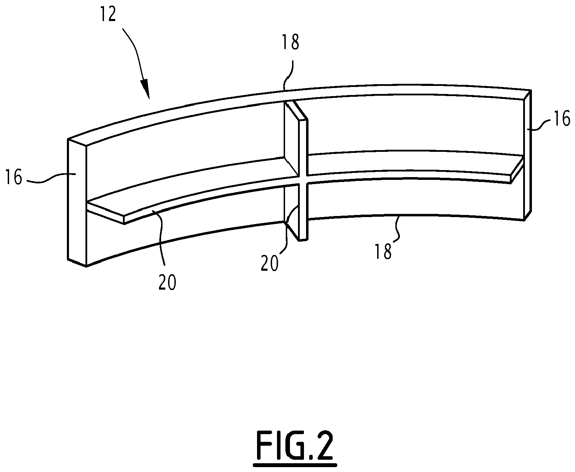

As illustrated on Figure 2, each wall portion 12 is in the shape of a curved plate that is a portion of a cylindrical surface with having a quadrangular contour with two opposed longitudinal edges 16 substantially parallel to the longitudinal axis L and two transverse edges 18 extending between the longitudinal sides 16.

When the longitudinal axis L is vertical, the longitudinal edges 16 are substantially vertical and the transverse edges 18 are substantially horizontal.

Each wall portion 12 has an inner face oriented towards the inside of the sidewall 6 and an outer face oriented towards the outside of the sidewall 6

As illustrated on Figure 2, preferably, the wall portions 12 of the sidewall 6 include at least one stiffened wall portion 12, each stiffened wall portion 12 being provided with at least one stiffener 20.

In a preferred embodiment, each wall portion 12 of the sidewall 6 is stiffened. In another embodiment, the wall portions 12 include stiffened wall portions and non-stiffened wall portions 12.

Each stiffener 20 of each stiffened wall portion 12 is for example provided on the outer face of the wall portion 12 or, preferably, on the inner face of the wall portion 12.

In a particular example, each stiffener 20 of each stiffened wall portion 12 is located on the inner face of the wall portion 12.

Each stiffener 20 is for example provided as an elongated metallic profile applied onto the inner face or the outer face of the wall portion 12.

At least one or each stiffened wall portion 12 comprises for example at least one longitudinal stiffener 20 extending parallel to the longitudinal axis L and/or at least one transverse stiffener 20 extending in a plan perpendicular to the longitudinal axis L.

Each longitudinal stiffener 20 extend parallel to the longitudinal edges 16 of the wall portion 12. Each longitudinal stiffener 20 is for example center (i.e. substantially equidistant from the longitudinal edges 16) or off-centered (i.e. closer to one of the two longitudinal edges 16 and further from the other)

Each transverse stiffener 20 extends parallel to the transverse edges 16 of the wall portion 12. Each transverse stiffener 20 is for example center (i.e. substantially equidistant from the transverse edges 18) or off-centered (i.e. closer to one of the two transverse edges 18 and further from the other).

At least one stiffened wall portion 12 may comprise at least one oblique stiffener 20 extending obliquely and in particular helically relative to the longitudinal axis L (i.e. not parallel to the longitudinal axis L and no parallel to a transverse plane perpendicular to the longitudinal axis L).

The wall portion 12 illustrated on Figure 2 comprises one longitudinal stiffener 20 substantially equidistant from the longitudinal edges 16 and one transverse stiffener 20 substantially equidistant from the transverse edges 18, the longitudinal stiffener 20 and the transverse stiffener 20 crossing each other in the center of the wall portion 12.

Optionally, the lower end plate 8 is stiffened with at least one stiffener 20 and/or the upper end plate 8 is stiffened with at least one stiffener 20.

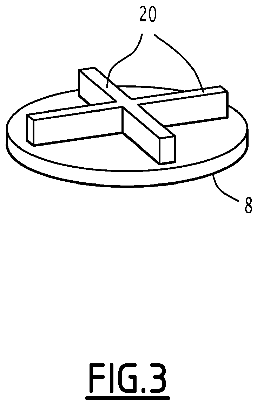

As illustrated on Figure 3, each stiffened end plate 8 comprises at least one stiffener 20 assembled to the end 8, preferably to an inner face of the end plate 8.

Preferably, a stiffener 20 provided on a wall portion 12 is fastened and in particular welded to another wall portion 12 and/or to a stiffener 20 of another wall portion 12 and/or to an end plate 8 and/or to a stiffener 20 of an end plate 8.

Preferably, a stiffener 20 provided on an end plate 8 is fastened and in particular welded to a wall portion 12 and/or to a stiffener 20 of a wall portion 12.

The stiffeners 20 provided on the wall portions 12 and/or on one or each end plate 8 allow stiffening and reinforcing the floater 2.

The length of the floater body 4 taken along the longitudinal axis L is for example comprises between 10 meters and 30 meters.

The diameter of the sidewall 6 or the major axis of the sidewall 6 is for example comprise between 10 meters and 20 meters.

The length of each axial section 10 of the sidewall 6 (taken along the longitudinal axis L is for example comprises between 60 centimeters and 3 meters.

The number of separate axial sections 10 of the side call 6 is preferably comprised between 3 and 50.

The length of each wall portion 12 (taken along the longitudinal edges 16 of the wall portion 12) is preferably comprised between 3 meters and 30 meters, preferably depending on the circumference.

The angular extend of each wall portion 12 (taken between the two longitudinal edges 16 of the wall portion 12) is preferably comprised between 18° and 180°.

These dimensions, individually and in combination, enable to obtain a floater 2 intended to be integrated in a large floating structure, in particular a floating structure of an off-shore wind turbine, with the sidewall 6 being composed of wall portions 12 that can be transported conveniently via public roads, railways, ship and/or airplane, in particular wall portions 12 that can be transported in standardized transport containers.

A "standardized transport container" means a container specifically designed for road, rail, sea transport and/or airborne transport. Such a container is also referred to as an "international transport container" or "intermodal transport container" or "maritime transport container".

A standardized transport container is, for example, in accordance with the ISO 668 standard and/or the ISO 1496 standard.

Such a standardized transport container is a rectangular parallelepiped shape with generally a width of 10 feet, a height of 10 feet and a length of selectively 10 feet, 20 feet, 30 feet, 38 feet or 45 feet (1 foot = 0.3048 m).

In one example, all the wall portions 12 of the sidewall 6 exhibit the same thickness.

In another example, the sidewall 6 comprises wall portions 12 exhibiting different thicknesses.

In a particular example, wall portions 12 located in connection areas of the floater body 4 intended for connection of structural members of a floating structure into which the floater 2 is incorporated, such as beam or braces, exhibit a thickness higher that wall portions 12 located outside the connections areas.

The wall portions 12 of greater thickness allow locally reinforcing the sidewall 6, in particular in areas of the sidewall 6 that can potentially be subjected to higher stress.

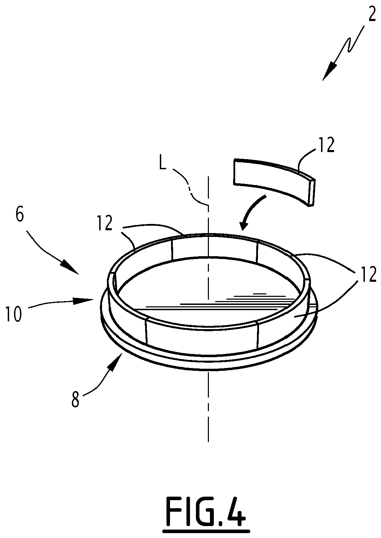

Figures 4 - 7 are perspective views illustrating steps of a manufacturing method for manufacturing the floater 2 of Figure 1.

The manufacturing method comprises the step of obtaining the wall portions 12 and assembling the wall portions 12 such as to obtain the sidewall 6.

Preferably, the step of assembling the wall portions 12 comprises assembling the axial sections 10 sequentially, with assembling the wall portions 12 of a following axial section 10 to the wall portions 12 of a preceding axial section 10.

Preferably, as illustrated on Figures 4 - 6, the manufacturing method comprises assembling the wall portions 12 of a first axial section 10 onto one of the end plates 8, with assembling each wall portion 12 of the first axial section 10 to the end plate 8 and to the adjacent wall portions 12 of the first axial section 10, then assembling the other axial sections 10 of the sidewall 6 sequentially, the wall portions 12 of each following axial section 10 being assembled to the wall portions 12 of the preceding axial section 10, and then assembling the other end plate 8 to the last axial section 10.

As illustrated on Figure 3-5, the sidewall 6 is for example erected from bottom to top. In this view, the first axial section 10 is assembled to a top surface of an end plate 8, and then each following axial section 10 is assembled on top of the preceding axial section 10.

Alternatively, the sidewall 6 is for example erected from top to bottom. In this view, the first axial section 10 is assembled to a bottom surface of an end plate 8 and then each following axial section 10 is assembled at the bottom of the preceding axial section 10.

In this alternative, the assembly formed of the end plate and the already assembled axial section(s) 10 is suspended, e.g. to a crane, and raised before assembly the next axial section 10 such that the assembly of the axial section 10 is always performed at the same height above ground. The partly assembled floater body 4 is raised incrementally between the assembly of a preceding axial section 10 and the assembly of the next axial section 10.

Preferably, the wall portions 12 of each following axial section 10 are placed such that the joints between the wall portions 12 of the following axial section 10 are circumferentially offset with respect to the joints between the wall portion 12 of the preceding axial section 10.

Optionally, when at least one internal bulkhead 14 is provided inside the floater body 4, each bulkhead 14 is inserted inside the floater body 4 before assembling the second end plate 8 closing the floater body 4.

As illustrated on Figure 4, at least one or each bulkhead 14 is for example inserted inside the partly assembled floater body 4 after assembly of all the axial sections 10.

Alternatively, at least one or each bulkhead 14 is for example inserted inside the partly assembled floater body 4 between the assembly of a preceding axial section 10 and the assembly of the following axial section 10.

The assembly between the end plates 8, the wall portions 12, and, if applicable, the bulkhead(s) 14 is preferably performed by welding, in particular TIG welding or MIG welding, and preferably MIG welding.

During assembly of the wall portions 12, longitudinal edges 16 of adjacent wall portions 12 of a same axial section 10 are fastened together, in particular welded together, and/or transverse edges of adjacent wall portions 12 of adjacent axial sections 10 are fastened together, in particular welded together.

Optionally, at least one stiffener 20 provided on a wall portion 12 and/or an end plate is fastened to a wall portion 12 and/or to an end plate 8 and/or to another stiffener 20 of a wall portion 12 or an end plate 8.

Preferably, stiffeners 20 provided on adjacent wall portions 12 are fastened together such as to form a network of connected stiffeners 20 on the sidewall 6 of the floater body 4.

Preferably, stiffeners 20 provided on adjacent an end plate 8 are fastened to wall portions 12 fastened to the end plate 8 and/or stiffeners 20 of wall portions 12 fastened to the end plate 8.

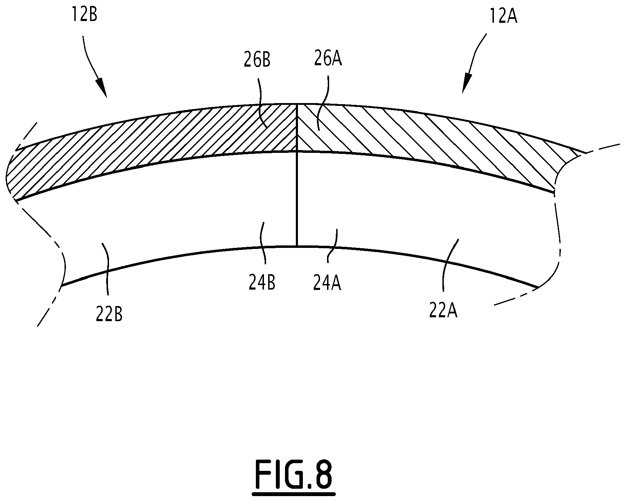

As illustrated on Figures 8 - 10, different technics are contemplated for assembling two adjacent wall portions 12 provided with stiffeners 20. The numeral references of Figures 1 - 7 are used on Figures 8-10 with adding the suffix letters A and B to distinguish the two wall portions 12.

In one example illustrated on Figure 8, a first wall portion 12A (on the right of Figure 8) has a first stiffener 22A having an end portion 24A terminating at an edge 26A of the first wall portion 12 and a second wall portion 12B (on the left on Figure 8) has a second stiffener 22B having an end portion 24B terminating at an edge 26B of the second wall portion 12B.

The first wall portion 12A and the second wall portion 12B are assembled by butting their edges 26A, 26B and connecting them, preferably by welding, and connecting the end portions 24A, 24B of the first stiffener 22A and the second stiffener 22B together, preferably by welding.

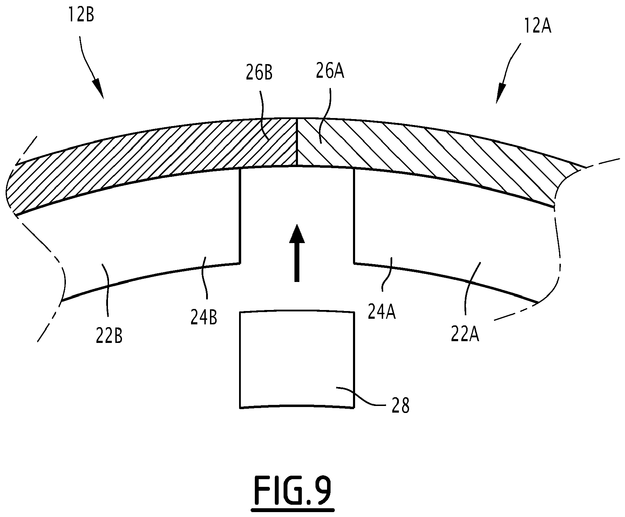

The example illustrated on Figure 9 differs from that of Figure 8 in that the first wall portion 12A (on the right of Figure 9) has a first stiffener 22A having an end portion 24A terminating at a distance from the edge 26A of the first wall portion 12A and the second wall portion 12B (on the left on Figure 9) has a second stiffener 22B having an end portion 24B terminating at a distance from the edge 26B of the second wall portion 12.

The first wall portion 12A and the second wall portion 12B are assembled by butting the edges 26A, 26B of the first wall portion 12A and the second wall portion 12B and connecting them together, preferably by welding, and connecting the end portion 24A of the first stiffener 22A to the end portion 24B of the second stiffener 22B using a connector 28 inserted between the end portion 24A of the first stiffener 22A and the end portion 24B of the second stiffener 22B, the connector 28B being assembled to each of the end portion 24A of the first stiffener 22A and the end portion 24 of the second stiffener 22B, preferably by welding.

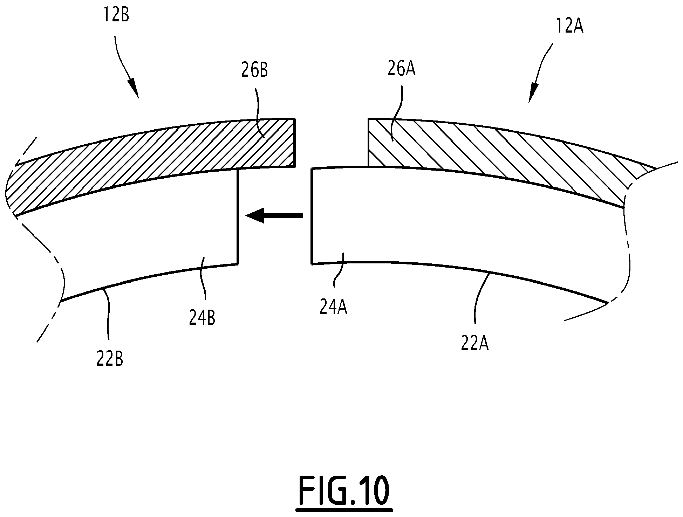

In one example illustrated on Figure 10, the first wall portion 12A (on the right on Figure 10) has a first stiffener 22A that has a protruding end portion 24A that protrudes from the edge 26A of the first wall portion 12A.

The first wall portion 12A and a second wall portion 12B (on the left on Figure 10) are assembled by butting the edges 26A, 26B of the first wall portion 12A and the second wall portion 12B and connecting them together, preferably by welding, and connecting the end portion 24A of the first stiffener 22A to second wall portion 12B, in particular to an inner face of the second wall portion 12B, e.g. by welding.

Advantageously, as illustrated on Figure 10, the second wall portion 12B has a second stiffener 22B that has setback end portion 24B terminating at a distance of the edge 26B of the second wall portion 12B.

The first wall portion 12A and the second wall portion 12B are assembled together by butting the edges 26A, 26B of the first wall portion 12A and the second wall portion 12B and connecting them together, preferably by welding, by connecting the end portion 24A of the first stiffener 22A to second wall portion 12B, in particular to an inner face of the second wall portion 12B, preferably by welding, and/or by connecting the protruding end portion 24A of the first stiffener 22A to the setback end portion 24B of the second stiffener 22B, preferably by welding.

In one example, at least one wall portion 12 is provided with a stiffener extending between two opposed edges of the wall portion 12, the stiffener having a protruding end portion protruding from one of the two edges and a setback end portion ending at a distance from the other one of the two edges.

Two such wall portions 12 are for example assembled together by butting edges of the two wall portions 12 such as to connect the protruding end portion of the stiffener of one of the two wall portions 12 to the setback end portion of the stiffener of the other wall portion 12.

The assembly technics of Figure 8-10 apply for the connection of two adjacent wall portions 12 of a same axial section 10 or two adjacent wall portions 12 of two adjacent axial section 10. In the first case, the first stiffener 22A and the second stiffener 22B are for example transverse stiffeners, the edges 26 being longitudinal edges. In the second case, the first stiffener 22A and the second stiffener 22B are for example longitudinal stiffeners, the edges 26 being transverse edges.

Advantageously, the wall portions 12 are manufactured at a first site, then transported to a second site via public roads, via freight train, via ship and/or via airplane, then assembled to form the sidewall 6 of the floater body 4 at the second site, the second site being preferably at seashore.

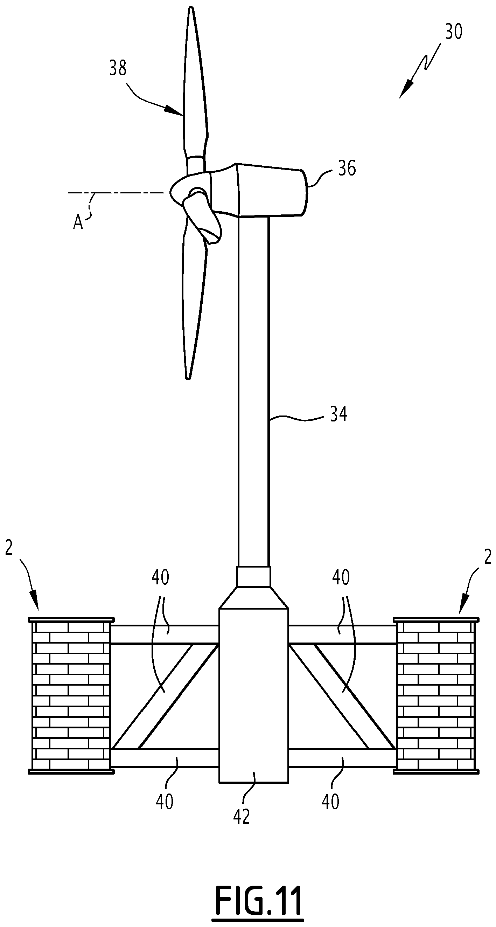

As illustrated on Figure 11, an offshore wind turbine 30 comprises a floating structure 32, a mast 34 extending upwardly from the floating structure 32, a nacelle 36 supported at an upper end of the mast 34 and a rotor 38 mounted on the nacelle 36 with being rotatable about a rotation axis A.

The offshore wind turbine 30 is a horizontal axis wind turbine, in which the axis of rotation A of the rotor 38 is substantially horizontal. In a variant, the offshore wind turbine 30 is a vertical axis wind turbine, in which the axis of rotation A of the rotor 38 is substantially vertical.

The floating structure 32 comprises floaters 2 connected by connection members 40. The connection members 40 are for example braces or beams. The floating structure 32 comprises a support 42 connected to the floaters 2 by the connection member 40, the support 42 supporting the mast 34.

A method of manufacturing the floating structure 32, in particular a floating structure of an off-shore wind turbine 30, includes the manufacture of a plurality of floaters 2 and the connection of the floaters 2 with connection members 40 such as to obtain the floating structure 32 comprising several floaters 2 connected by the connection members 40.

Owing to the invention, the floaters 2 in particular and the floating structure 32 incorporating the floaters 2 in general can be manufactures economically and with a reduced carbon footprint.

The manufacture of wall portions 12 corresponding to angular sectors of axial sections 10 of the cylindrical sidewall 6 of the floater 2 and the subsequent assembly of these wall portions 12 to form the sidewall 6 is efficient economically and in term of carbon footprint.

The wall portions 12 can be manufactured on a first manufacturing site and transported to a second assembly site economically.

In particular, many wall portions 12 can be fitted one into the others in a compact manner for transportation in a container, e.g. a standard transport container, via public roads, freight train, ship and/or airplane, without the need to use specific containers or specific transportation means.

This allows manufacturing the wall portions 12 efficiently in a dedicated manufacturing plant located at the first site, transporting the wall portion 12 easily from the first site to the second site, for example in standard containers, and assembling the floater 2 at the second site, this avoiding transportation of large parts on long distances.

The manufacture of the floater 2 can be distributed between the first site and the second site for manufacture and transport efficiency with involving operators on both the first site and the second site.

The stiffening of the wall portions 12 allows obtaining a floater 2 having the required mechanical strength capable and withstanding the high mechanical stress encountered in use, in particular in a floating structure 32 of an offshore wind turbine.

The connection of the wall portions 12 making use of the stiffeners 20, 22A, 22B allows obtaining a stiff sidewall 6.

## Claims

1. Method of manufacturing a floater (2), in particular a floater (2) of a floating structure (32) of an off-shore wind turbine (30), the floater (2) comprising a metallic hollow floater body (4) comprising a substantially cylindrical sidewall (6) extending along a longitudinal axis (L) and end plates (8) closing the axial ends of the sidewall (6), the method comprising the steps of:
- obtaining a plurality of wall portions (12), each wall portion (12) corresponding to an angular sector of an axial section (10) of the sidewall (6); and
- assembling the wall portions (12) such as to manufacture axial sections (10) of the sidewall sequentially, the wall portions (12) of each following axial section (10) being assembled to wall portions (12) of the preceding axial section (10);
wherein :
- the assembly of the wall portions (12) starts with the assembly of a first axial section (10) onto one of the end plates (8); and
- at least one wall portion (12) is stiffened, each stiffened wall portion (12) being provided with at least one stiffener (20) fastened on the wall portion (12) preferably on an inner face of the wall portion (12) and/or at least one of the end plates (8) is stiffened, each stiffened end plate (8) being provided with at least one stiffener (20) attached to the end plate (8), preferably to an inner face of the end plate (8).

2. Manufacturing method according to claim 1, wherein the wall portions (12) of at least one or each following axial section (10) are assembled on top of a preceding axial section (10).

3. Manufacturing method according to claim 1 or 2, wherein the wall portions of at least one or each following axial section (10) are assembled at the bottom of a preceding axial section (10).

4. Manufacturing method according to claim 1 or 2, wherein the sidewall (6) is manufactured from bottom to top, the wall portions (2) of each following axial section (10) being assembled on top of the preceding axial section (10).

5. Manufacturing method according to claim 1 or 2, wherein the sidewall (6) is manufactured from top to bottom, the wall portions (12) of each following axial section (10) being assembled at the bottom of the preceding axial section (10).

6. Manufacturing method according to any one of the preceding claims, comprising fastening a stiffener (20) provided on a wall portion (12) to another wall portion (12) and/or to a stiffener (20) of another wall portion (12), to an end plate (8) and/or to a stiffener (20) of an end plate (8).

7. Manufacturing method according to any one of the preceding claims, comprising fastening a stiffener (20) provided on an end plate (8) to a wall portion (12) and/or to a stiffener (20) of a wall portion (12).

8. Manufacturing method according to any one of the preceding claims, comprising the assembly of a first wall portion (12A) and a second wall portion (12B) with fastening a stiffener (22A) of the first wall portion (12A) to the second wall portion (12B) and/or to a stiffener (22B) of the second wall portion (12B).

9. Manufacturing method according to any one of the preceding claims, wherein a first wall portion (12A) has a stiffener (22A) having an end portion (24A) protruding from an edge (26A) of the first wall portion (12A), the manufacturing method comprising the assembly of the first wall portion (12A) to a second wall portion (12B) with fastening the protruding end portion (24A) of the stiffener (22A) to the second wall portion (12B).

10. Manufacturing method according to any one of the preceding claims, wherein a first wall portion (12A) has a stiffener (22A) having an end portion (24A) protruding from an edge (26A) of the first wall portion (12A) and a second wall portion (12B) has a stiffener having a setback end portion (24B) ending at a distance from an edge (26B) of the second wall portion (12B), the manufacturing method comprising the assembly of the first wall portion (12A) and the second wall portion (12B) with fastening the protruding end portion (24A)of the stiffener (22A) of the first wall portion (12A) to the second wall portion and/or to the setback end potion (24B) of the stiffener (22B) of the second wall portion (12B).

11. Manufacturing method according to any one of the preceding claims, wherein a first wall portion (12A) provided with a stiffener (22A) having a setback end portion (24A) terminating at a distance from an edge( 26A) of the first wall portion (12A) and a second wall portion (12B) has a stiffener having a setback end portion (24B) ending at a distance from an edge (26B) of the second wall portion (12B), the manufacturing method comprising the assembly of the first wall portion (12A) and the second wall portion (12B) with connecting the set back end portion (24A) of the stiffener (22A) of the first wall portion (12A) to the a setback end portion (24B) of the stiffener (22B) of the second wall portion (12B) using an intermediate connection piece (28).

12. Manufacturing method according to any one of the preceding claims, wherein at least one wall portion (12) has a stiffener (20) having one end portion that terminates at an edge (16, 18) of the wall portion (12).

13. Manufacturing method according to any one of the preceding claims, wherein the wall portions (12) are manufacture at a first site, then transported to a second site via public roads, via freight train, via ship and/or via airplane, then assembled to form the sidewall (6) of the floater (2) at the second site, the second site being preferably at seashore.

14. Method of manufacturing a floating structure (32), in particular a floating structure (32) of an off-shore wind turbine (30), the manufacturing method including the manufacture of a plurality of floaters (2) as per the manufacturing method as in any one of the preceding claims, and the connection of the floaters (2) with connection members (40) such as to obtain the floating structure (32) comprising several floaters (2) connected by the connection members (40).
